# EUROPÄISCHE PATENTANMELDUNG

(11) **EP 4 372 283 A1**
(43) Veröffentlichungstag der Anmeldung: **22.05.2024**
(21) Anmeldenummer: 23208715.5
(22) Anmeldetag: 09.11.2023
(51) Int. Cl.: F24C 7/08, G05G 1/08, G06F 3/0362, A47L 15/42, F25D 29/00

(54) **KÜCHEN- UND/ODER GASTRONOMIEGERÄT**

(30) Priorität: 15.11.2022 DE 102022130189
(71) Anmelder: Welbilt Deutschland GmbH, 82436 Eglfing (DE)
(72) Erfinder: WILD, Hannes, 82418 Riegsee (DE); MANTER, Arndt, 88263 Horgenzell (DE); SIEBERT, Sebastian, 83115 Neubeuern (DE)
(74) Vertreter: Hoefer & Partner Patentanwälte mbB

(57) **Zusammenfassung**

Die Erfindung betrifft ein Küchen- und/oder Gastronomiegerät (1), insbesondere Gargerät, umfassend ein Steuergerät (7), ein an das Steuergerät (7) angeschlossenes Touch-Display (5), und eine Dreheinheit (6) mit einem vom Benutzer um eine Z-Achse drehbaren Knopf (12) zur Ausführung einer Benutzereingabe (20), und mit zumindest einem am Knopf (12) angeordneten Touch-Element (15) zum Überstreichen und dadurch Betätigen des Touch-Displays (5); wobei die Dreheinheit (6) auf einer Oberfläche (4) des Küchen- und/oder Gastronomiegeräts (1) befestigt ist.

## Beschreibung

Die Erfindung betrifft ein Küchen- und/oder Gastronomiegerät, insbesondere ein Gargerät, mit einem Touch-Display.

Es ist Aufgabe vorliegender Erfindung, ein Küchen- und/oder Gastronomiegerät anzugeben, das bei einfacher Herstellung bedienerfreundlich ist.

Die Lösung der Aufgabe erfolgt durch die Merkmale des unabhängigen Anspruchs. Die abhängigen Ansprüche haben bevorzugte Ausgestaltungen der Erfindung zum Gegenstand.

Die Erfindung zeigt ein Küchen- und/oder Gastronomiegerät. Dieses Gerät ist insbesondere für den gewerblichen Einsatz in der Gastronomie oder für den häuslichen Gebrauch in einer Küche ausgebildet. Bei dem Gerät handelt es sich vorzugsweise um ein Lebensmittelbehandlungsgerät, insbesondere ein Gargerät. Allerdings kann die hier vorgestellte Erfindung auch an anderen Geräten mit Touch-Display angewandt werden, beispielsweise an einer Spülmaschine oder einem Kühlgerät.

Das Küchen- und/oder Gastronomiegerät umfasst ein Steuergerät. An dieses Steuergerät ist ein Touch-Display angeschlossen. Das Steuergerät kann über das Touch-Display Informationen an einen Benutzer ausgeben und kann über das Touch-Display entsprechende Benutzereingaben empfangen. Das Steuergerät ist ausgebildet, basierend auf den Benutzereingaben, eine Einheit des Küchen- und/oder Gastronomiegeräts anzusteuern. Beispielsweise kann es sich hierbei um eine Heizeinheit oder um eine Umlufteinheit handeln.

Das Touch-Display befindet sich insbesondere an einer Oberfläche des Lebensmittelbehandlungsgerätes und bildet dabei, gegebenenfalls zusammen mit einer das Touch-Display abdeckenden Scheibe, einen Teil dieser Oberfläche. Wobei es sich bei dem verwendeten Touch-Display um eine sogenanntes Multi-Touch Einheit handeln kann. Solche Systeme können mehrere gleichzeitige Berührungen erkennen und verarbeiten und Richtungsänderungen der Berührung entsprechend analysieren. Diese Technik wird verwendet um Gesten zu erkennen und sogenanntes Wischen (auch als Swipen bezeichnet) zu ermöglichen. Das Swipen wird z.B. zum Weiterblättern verwendet. Ferner kann diese Technik verwendet werden, um zum Beispiel angezeigte Elemente zu skalieren oder zu drehen. Der Begriff Multi-Touch wird meistens auch im Zusammenhang mit der Fähigkeit des Systems benutzt, Gesten zu erkennen, wenn zum Beispiel durch Wischen (Swipen) weitergeblättert werden kann. Hinsichtlich der Funktionsweise des Touch-Displays und der Gestenerkennung wird auf Druckschrift DE102008020995A14 verwiesen, deren Inhalt hier miteinbezogen wird.

Ferner umfasst das Küchen- und/oder Gastronomiegerät eine Dreheinheit. Diese Dreheinheit wiederum umfasst einen Knopf. Der Knopf ist von einem Benutzer um eine Z-Achse drehbar, um so eine Benutzereingabe auszuführen. Die Informationsübertragung von der Dreheinheit, insbesondere von dem Knopf, zum Steuergerät erfolgt dabei nicht etwa über eine Kabelverbindung oder eine Funkverbindung, sondern - insbesondere ausschließlich - über das Touch-Display. Hierzu befindet sich an dem Knopf zumindest ein Touch-Element, das zum Überstreichen des Touch-Displays und somit zum Betätigen des Touch-Displays ausgebildet ist. Hierzu kann das Touch-Element das Touch-Display oder die das Touch-Display abdeckende Scheibe berühren und darauf gleiten oder aber das Touch-Element wird mit einem entsprechend geringen Abstand über das Touch-Display geführt. In beiden Varianten ist es möglich, dass das Touch-Display das Touch-Element erfasst und dadurch die Benutzereingabe erfolgen kann.

Es ist vorzugsweise vorgesehen, dass die Dreheinheit fest auf der Oberfläche befestigt ist. Dabei ist zu beachten, dass die "Oberfläche" sowohl durch das Touch-Display (bzw. die darauf liegende Scheibe) als auch durch den umliegenden Bereich des Touch-Displays gebildet sein kann. Die "feste Befestigung an der Oberfläche" beschreibt somit die Befestigung der Dreheinheit auf dem Touch-Display, neben dem Touch-Display, oder teilweise auf dem Touch-Display und teilweise neben dem Touch-Display.

Unter "fester Befestigung" wird verstanden, dass zumindest ein Teil der Dreheinheit - beispielsweise der noch zu beschreibende Sockel - bei der Bedienung und insbesondere auch bei der Reinigung des Gerätes nicht von der Oberfläche entfernbar ist. Vielmehr bleibt zumindest ein Teil der Dreheinheit dauerhaft an der Oberfläche befestigt. Besonders bevorzugt ist zumindest dieser Teil der Dreheinheit nicht-zerstörungsfrei von der Oberfläche lösbar.

Wie erwähnt, kann die Dreheinheit einen Sockel umfassen, der an der Oberfläche befestigt ist. Auf diesem Sockel steckt drehbar der Knopf. Gemäß einer Variante ist vorgesehen, dass der Knopf zur Bedienung, insbesondere auch zur Reinigung, nicht von dem Sockel entfernbar ist. Gemäß einer anderen Variante ist vorgesehen, dass der Knopf zur Bedienung am Sockel verbleibt und zur Reinigung vom Sockel abnehmbar ist.

In alternativer Ausgestaltung ist die gesamte Dreheinheit, insbesondere Sockel und Knopf, von der Oberfläche zerstörungsfrei lösbar und wieder auf der Oberfläche befestigbar, Dadurch kann die gesamte Dreheinheit, z.B. zur Reinigung, abgenommen werden.

Es versteht sich, dass die Dreheinheit derart auf und/oder neben dem Touch-Display befestigt ist, so dass beim Drehen des Knopfes das zumindest eine Touch-Element über das Touch-Display bewegbar ist, so dass über das Touch-Display eine Benutzereingabe in das Steuergerät möglich ist. Der Vorteil der Erfindung liegt darin, dass auf sehr einfache Art und Weise ein Gerät mit Touch-Display um eine Dreheinheit erweitert werden kann. Es bedarf dabei keiner aufwendigen Konstruktionsänderung, sondern es muss lediglich die Dreheinheit auf der Oberfläche befestigt werden.

Bevorzugt ist vorgesehen, dass an dem Knopf mehrere der Touch-Elemente angeordnet sind. Je mehr dieser Touch-Elemente verwendet werden, desto feiner kann die über den Knopf eingebrachte Benutzereingabe erfasst werden.

Bei dem Touch-Display handelt es sich vorzugsweise um ein kapazitives Touch-Display. Das zumindest eine Touch-Element, vorzugsweise jedes der mehreren Touch-Elemente, ist entsprechend zur Betätigung des kapazitiven Touch-Displays ausgebildet.

Hierzu ist insbesondere vorgesehen, dass das einzelne Touch-Element ein elektrisch leitendes Element umfasst. Dieses wiederum ist vorzugsweise mit dem elektrisch leitenden Knopf elektrisch leitend verbunden. Wenn der Benutzer den Knopf berührt, erfolgt die Erdung über den Benutzer, so dass auf diese Art und Weise das kapazitive Touch-Display betätigt werden kann.

Das elektrisch leitende Element des einzelnen Touch-Elementes ist vorzugsweise mit einer flexiblen Hülle abgedeckt.

Ferner ist bevorzugt vorgesehen, dass die Dreheinheit lediglich teilweise mit dem Touch-Display überlappt. Insbesondere ist vorgesehen, dass 20% bis 80%, besonders vorzugsweise 30% bis 70%, der senkrecht auf die Oberfläche projizierten Fläche der Dreheinheit mit dem Touch-Display überlappt. Dadurch kann erreicht werden, dass ein möglichst kleiner Teil des Touch-Displays für die Dreheinheit verwendet wird, und ein entsprechend großer Teil des Touch-Displays übrigbleibt, um vom Benutzer direkt über eine Finger-Eingabe betätigt zu werden.

Bevorzugt ist bei dieser teilweisen Überlappung vorgesehen, dass das zumindest eine Touch-Element, vorzugsweise jedes der mehreren Touch-Elemente, so angeordnet ist/sind, dass beim Drehen des Knopfes um die Z-Achse das einzelne Touch-Element sowohl das Touch-Display überstreichen kann als auch von dem Touch-Display herunter bewegbar ist. Überlappt die Dreheinheit beispielsweise um 50% ihrer Fläche mit dem Touch-Display, so kann das einzelne Touch-Element über eine Drehung von 180° hinweg über das Touch-Display bewegt werden und über die nächsten 180° wird das Touch-Element außerhalb des Touch-Displays bewegt.

Bei Verwendung mehrerer Touch-Elemente ist gemäß einer Variante vorgesehen, dass alle denselben Abstand zur Z-Achse aufweisen und/oder gleich (hinsichtlich Größe und Geometrie) ausgestaltet sind und/oder entlang des Umfangs gleich verteilt sind.

Um jedoch die Erkennungsgenauigkeit und Robustheit des Systems zu erhöhen und/oder eine Drehpositionserkennung und/oder Drehrichtungserkennung zu ermöglichen, sind vorzugsweise folgende Ausgestaltungen vorgesehen. Diese sind insbesondere vorteilhaft, wenn die Scheibe am Touch-Display z. B. verschmutz ist.

Bevorzugt weisen zumindest zwei Touch-Elemente unterschiedlichen Abstand zur Z-Achse auf, so dass insbesondere eine Drehpositionserkennung möglich ist. Durch die Position dieser unterschiedlich positionierten Touch-Elemente auf dem Touch-Display kann erfasst werden, an welcher Drehposition, also bei welchem Drehwinkel, sich der Knopf befindet. Dies kann für eine entsprechend ausgestaltete Benutzereingabe genutzt werden.

Zusätzlich oder alternativ können bevorzugt Touch-Elemente verwendet werden, die sich untereinander in Größe und/oder Geometrie unterscheiden.

Zusätzlich oder alternativ können bevorzugt die Touch-Elemente entlang des Umfangs ungleichmäßig verteilt werden.

Wie bereits erwähnt, kann die Dreheinheit einen Sockel umfassen. Dieser ist an der Oberfläche befestigt. Auf dem Sockel befindet sich drehbeweglich der Knopf. Der Knopf ist vorzugsweise mittels einer Sockel-Knopf-Verbindung mit dem Sockel verbunden. Beispielsweise kann die Sockel-Knopf-Verbindung eine Rastnasenverbindung zwischen Knopf und Sockel umfassen.

Wie bereits beschrieben, ist vorgesehen, dass die Dreheinheit, insbesondere sowohl der Sockel als auch der Knopf, kabellos an der Oberfläche angebunden ist/sind. Insbesondere ist keine kabelgebundene Verbindung zwischen Dreheinheit und Steuergerät und auch keine kabelgebundene Verbindung zwischen Dreheinheit und Touch-Display vorgesehen.

Besonders bevorzugt ist die Dreheinheit, insbesondere eine Unterseite des Sockels, auf die Oberfläche geklebt. Alternativ oder zusätzlich zur Klebung ist vorgesehen, dass die Dreheinheit auf die Oberfläche geschweißt und/oder gelötet und/oder genietet und/oder geschraubt ist.

Wie bereits beschrieben, kann das Touch-Display von einer Scheibe abgedeckt sein. Diese Scheibe kann auch größer als das Touch-Display sein und somit über das Touch-Display hinausragen. Gemäß einer Variante ist die Dreheinheit vorzugsweise auf diese Scheibe geklebt.

Des Weiteren kann das Touch-Display von einem Rahmen umgeben sein. Dabei ist nicht ausgeschlossen, dass das Touch-Display auch von einer Scheibe abgedeckt ist. Der Rahmen ist insbesondere aus Kunststoff oder Metall gefertigt. Vorzugsweise ist die Dreheinheit, insbesondere der Sockel, auf den Rahmen geklebt.

Wie bereits erwähnt, ist der Knopf für eine entsprechende Benutzereingabe um die Z-Achse drehbar. Diese Z-Achse steht dabei insbesondere senkrecht zu der beschriebenen Oberfläche.

Bei der drehenden Bewegung überstreicht das zumindest eine Touch-Element das Touch-Display - berührt es dabei oder wird sehr knapp über die Oberfläche geführt. Die dabei ausgeführte Betätigung des Touch-Displays wird im vorliegenden Dokument als "überstreichende Betätigung" bezeichnet.

Das Erfassen und/oder Auswerten der "überstreichenden Betätigung" - insbesondere mit dem Steuergerät - kann grundsätzlich auf beliebige Art erfolgen. Beispielweise kann die "überstreichende Betätigung" wie "Swipen" erfasst werden. Wenn das Touch-Display hierzu nicht ausgebildet ist oder aus anderen Gründen ein Swipen nicht erfassbar ist, kann die "überstreichende Betätigung" auch erfasst werden, indem mehrere beabstandete Einzel-Betätigungen des Touch-Displays erfasst werden.

In einer möglichen Ausführung wird die Erkennung des "Swipens" bewusst vermieden. Da auch Verunreinigungen in das System gelangen können, kann eine Wischbewegung der Touch-Elemente eventuell nicht zuverlässig genug erkannt werden. Eine eindeutige Erkennung durch Vergleich mit einem Referenzsignal ermöglicht eine Erkennung auch in unsauberen Umgebungen. Hierzu hat die Dreheinheit symmetrisch angeordnete Touch-Elemente, z. B. aus geeigneter Weichkomponente. Nun wählt man zum Beispiel drei Bereiche (als Touch-Felder bezeichnet) des Touch-Displays zur Auswertung aus und konstruiert so, dass gleichzeitig zumindest drei Touch-Elemente mit dem Touch-Display überlappen. Der Abstand der Touch-Felder darf jedoch nicht mit dem Abstand der Touch-Elemente übereinstimmen, sodass beispielsweise ein Touch-Element genau in Überlappung mit einem Touch-Feld ist und gleichzeitig ein anderes Touch-Element ein anderes Touch-Feld nur teilweise überlappt. Am obersten der drei, mit dem Touch-Display überlappenden Touch-Element bestimmt man die Signalstärke als Referenz bzw. Nullwert der Drehbewegung. Wichtiger aber ist die Ermittlung des Zeitbedarfs im Segment n (definiert als Bogenlänge zwischen einem ersten und einem benachbarten zweiten Touch-Feld), hieraus kann die Drehgeschwindigkeit bestimmt werden. Zur Ermittlung der Drehrichtung wird nun ein drittes Touch-Feld zur Auswertung integriert, dieses dritte Touch-Feld sitzt asymmetrisch zwischen zwei Touch-Elementen der Dreheinheit.

In diesem Beispiel ist also die Bogenlänge zwischen zweitem und drittem Touch-Feld anders, insbesondere kürzer, als n.

Bevorzugt ist vorgesehen, dass der Knopf zum Ausführen einer Benutzereingabe nicht nur drehbar ist, sondern auch parallel zur Z-Achse drückbar ist. Dabei ist der Knopf vorzugsweise gegen ein elastisches Element, beispielsweise eine Feder, drückbar.

Durch dieses Drücken des Knopfes parallel zur Z-Achse soll eine "drückende Betätigung" des Touch-Displays ausgeführt werden. Solch eine drückende Betätigung beschreibt sowohl das tatsächliche Berühren, insbesondere Drücken, auf das Touch-Display, als auch das ausreichend nahe heranführen eines Touch-Elements an das Touch-Display, um eine Benutzereingabe ausführen.

Bevorzugt ist vorgesehen, dass das zumindest eine Touch-Element, vorzugsweise jedes der mehreren Touch-Elemente, das/die auch für die überstreichende Betätigung verwendet wird/werden, ebenso für die drückende Betätigung des Touch-Displays ausgebildet ist. Dies funktioniert insbesondere, indem beim Drücken des Knopfes das entsprechende Touch-Element näher an das Touch-Display herangeführt wird, als bei der überstreichenden Betätigung - insbesondere dabei auf das Touch-Display drückt.

Hierzu ist insbesondere die beschriebene flexible Hülle von Vorteil, die das elektrisch leitende Element im Inneren des Touch-Elements abdeckt und beim Drücken auf den Knopf elastisch deformierbar ist.

Zusätzlich oder alternativ zur flexiblen Hülle ist bevorzugt vorgesehen, dass das Touch-Element, vorzugsweise jedes der mehreren Touch-Elemente, ausgebildet ist/sind, um bei der drückenden Betätigung durch Kontakt mit dem Touch-Display deformiert zu werden, wobei sich durch die Deformation die Auflagefläche des Touch-Elements auf dem Touch-Display vergrößert, was wiederrum als drückende Benutzereingabe erfassbar ist.

Sowohl beim Drücken als auch beim Drehen am Knopf können stets mehrere der Touch-Elemente gleichzeitig über das Touch-Display erkannt werden.

Zusätzlich oder alternativ ist es auch möglich, an der Dreheinheit zumindest ein Zusatz-Touch-Element anzuordnen. Dieses zumindest eine Zusatz-Touch-Element kann durch Drücken des Knopfes ausreichend nahe an das Touch-Display bewegt werden, insbesondere das Touch-Display berühren oder drücken, um eine Benutzereingabe auszuführen.

Gemäß einer vorteilhaften Ausführung ist das Zusatz-Touch-Element als Ringe am Knopf - insbesondere radial innerhalb der Touch-Elemente - ausgebildet. Der Ring ist vorzugsweise in der Tiefe relativ zu den Touch-Elementen zurückgesetzt. Vorzugsweise erzeugt der Ring auf einem eigens definierten Bereich des Touch-Display (auch als separates Touch-Feld bezeichnet) ein Signal welches eindeutig der drückenden Betätigung zugeordnet werden kann.

Der Ring ist vorzugsweise solide und somit als Endanschlag ausgeführt, d.h. insbesondere der Ring muss sich nicht zwingend komprimieren lassen. Dadurch wird ein Endanschlag realisiert welcher die Dreheinheit vor Überdrücken und daraus resultierender Beschädigung schützt.

Der Ring bietet weiterhin den Vorteil, dass die Z-Achsenbewegung, also die drückende Benutzereingabe, leicht erkennbar ist, da eine relativ große Fläche am Touch-Display zur Anlage kommt.

Insbesondere ist vorgesehen, dass das zumindest eine Zusatz-Touch-Element im Ruhezustand - also im nicht gedrückten Zustand des Knopfes - weiter von der Oberfläche entfernt ist als das zumindest eine Touch-Element und somit in der Tiefe zurückgesetzt ist.

Darüber hinaus ist bevorzugt vorgesehen, dass der Knopf zum Ausführen einer Benutzereingabe senkrecht zur Z-Achse, vorzugsweise gegen ein elastisches Element, verschiebbar ist. Dabei kann es sich um dasselbe elastische Element handeln, dass auch die Rückstellung bei der Bewegung parallel zur Z-Achse ermöglicht. So kann sich zwischen Knopf und Säule ein entsprechend elastisches Element, beispielsweise ein Schaumstoff oder ein Gummi, befinden, der sowohl eine Verschiebung parallel zur Z-Achse als auch senkrecht zur Z-Achse ermöglicht. Bei der Bewegung des Knopfes senkrecht zur Z-Achse überstreicht das zumindest eine Touch-Element das Touch-Display - ähnlich wie bei der Drehbewegung, allerdings nicht kreisförmig um die Z-Achse, sondern senkrecht zur Z-Achse.

Das Küchen- und/oder Gastronomiegerät ist vorzugsweise als Gargerät ausgebildet. Hierbei umfasst das Gargerät einen Garraum, in dem Lebensmittel zur Behandlung eingesetzt werden können. Des Weiteren umfasst das Gargerät eine Heizeinheit und/oder eine Umlufteinheit. Die Heizeinheit und/oder die Umlufteinheit sind vom Steuergerät ansteuerbar. Durch Bewegen der Dreheinheit, insbesondere durch Drehen des Knopfes, ist vorzugsweise eine Temperatur einstellbar und/oder veränderbar. Zusätzlich oder alternativ ist es vorzugsweise möglich, durch Bewegen der Dreheinheit ein Garprogramm einzustellen und/oder zu verändern. Ein Garprogramm betrifft beispielsweise die Verwendung der Umluft.

Die Erfindung umfasst ferner ein Verfahren zum Bilden - also zum erstmaligen Herstellen oder Nachrüsten - des Küchen- und/oder Gastronomiegeräts wobei die Dreheinheit auf einer Oberfläche des Küchen- und/oder Gastronomiegeräts befestigt, insbesondere aufgeklebt, wird. Bevor die Dreheinheit befestigt wird, muss das des Küchen- und/oder Gastronomiegeräts selbstverständlich noch keine Dreheinheit aufweisen. Insbesondere handelt es sich um einen Nachrüstvorgang, bei dem ein bereits benutztes Küchen- und/oder Gastronomiegerät nachträglich mit der Dreheinheit versehen wird.

Bevorzugt ist vorgesehen, dass vor dem Befestigen ein Montageprogramm des Küchen- und/oder Gastronomiegeräts gestartet wird und das Montageprogramm auf dem Touch-Display zumindest eine Positionierungshilfe zum Positionieren der Dreheinheit und/oder zum Positionieren einer Schablone anzeigt.

Um die Auswertung, welche in spezifischen Segmenten des Touch-Displays erfolgt, abzustimmen ist eine genaue Montage der Dreheinheit erforderlich. Hierfür gibt es verschiedene Möglichkeiten. Zur Verklebung der Dreheinheit auf dem Display kann eine Schablone mitgeliefert werden, welche im ersten Schritt aufgebracht wird. Hierbei wird das Montageprogramm am Touch-Display gestartet und die Schablone - z.B. durch die Anzeige von drei Kreuzen als Positionierungshilfen - ausgerichtet und dort angebracht. Die Dreheinheit kann dann in einer, z.B. kreisrunden, Aussparung der Schablone sicher aufgebracht werden. Dieser Aufwand kann nötig sein, da die Klebefläche der Dreheinheit von ihm selbst verdeckt ist.

Ferner können zum Beispiel als Positionierungshilfen kreisförmige Bereiche angezeigt werden, in denen die Dreheinheit verklebt werden darf.

Bevorzugt ist auch vorgesehen, eine Sichtmöglichkeit durch die Achse der Dreheinheit zu ermöglichen in dem z. B. eine Kappe am Ende auf die Dreheinheit montiert wird. Damit kann während der Verklebung, bei abgenommener Kappe, ein Achspunkt fokussiert werden und relativ gut getroffen werden.

Bevorzugt ist vorgesehen, dass nach dem Befestigen ein Kalibrierungsprogramm des Küchen- und/oder Gastronomiegeräts durchgeführt wird, wobei der Benutzer zumindest eine, im Kalibrierungsprogramm vordefinierte Bewegung an der Dreheinheit ausführt und das Steuergerät die dabei am Touch-Display erfassten Signale auswertet, um die im Steuergerät hinterlegte Software dahingehend zu kalibrieren, dass eine etwaige Abweichung der tatsächlichen Position der Dreheinheit von einer Sollposition berücksichtigt wird. Vorzugsweise wird dem Benutzer am Touch-Display die zumindest eine vordefinierte Bewegung, die vom Benutzer zur Kalibrierung auszuführen ist, angezeigt. Besonders bevorzugt wird dem Benutzer am Touch-Display eine Abfolge von zumindest zwei Bewegungen angezeigt, die zur Kalibrierung auszuführen sind.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Fig. 1: eine schematische Ansicht eines erfindungsgemäßen Küchen- und/oder Gastronomiegerätes gemäß einem Ausführungsbeispiel;
- Fig. 2: eine schematische Schnittansicht einer Dreheinheit des erfindungsgemäßen Küchen- und/oder Gastronomiegeräts gemäß dem Ausführungsbeispiel;
- Fig. 3: eine schematische Draufsicht auf die Dreheinheit des erfindungsgemäßen Küchen- und/oder Gastronomiegeräts gemäß dem Ausführungsbeispiel;
- Fig. 4: eine schematische Schnittansicht einer Variante der Dreheinheit aus Fig. 2;
- Fig. 5: eine schematische Draufsicht auf die Dreheinheit des erfindungsgemäßen Küchen- und/oder Gastronomiegeräts gemäß dem Ausführungsbeispiel zur Verdeutlichung der optionalen Verwendung von Touch-Elementen mit unterschiedlicher Größe und Geometrie;
- Fig. 6/7: schematische Draufsichten bei unterschiedlichen Drehwinkeln auf die Dreheinheit des erfindungsgemäßen Küchen- und/oder Gastronomiegeräts gemäß dem Ausführungsbeispiel zur Verdeutlichung der optionalen Verwendung von ungleichmäßig verteilten Touch-Elementen und/oder Touch-Elementen unterschiedlicher Größe; und
- Fig. 8/9: zwei schematische Schnittansichten der Dreheinheit des erfindungsgemäßen Küchen- und/oder Gastronomiegeräts gemäß dem Ausführungsbeispiel wie in Fig. 2; hier mit deformierbaren Touch-Elementen.

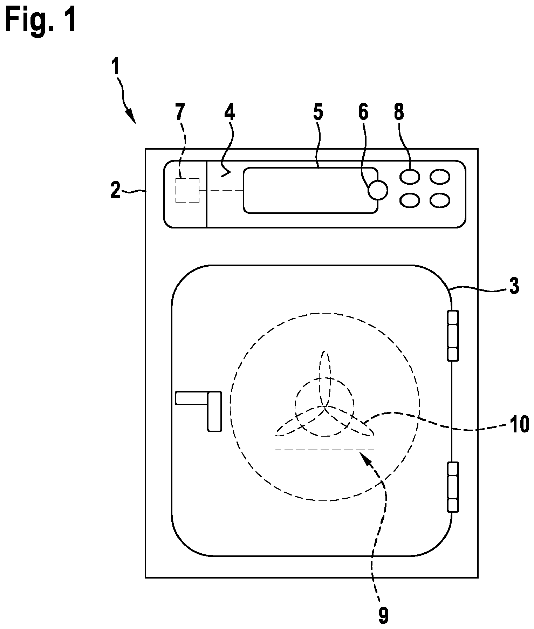

Fig. 1 zeigt eine Vorderansicht eines Küchen- und/oder Gastronomiegeräts 1 gemäß einem Ausführungsbeispiel. Das Küchen- und/oder Gastronomiegerät 1 ist als ein Gargerät für den gewerblichen Einsatz ausgebildet.

Das Küchen- und/oder Gastronomiegerät 1 umfasst ein Gehäuse 2. Im Inneren des Gehäuses 2 ist ein Garraum ausgebildet, der mittels einer Garraumtür 3 verschließbar ist. In oder an dem Garraum befinden sich eine Heizeinheit 9 und eine Umlufteinheit 10. Die Heizeinheit 9 und die Umlufteinheit 10 sind über ein Steuergerät 7 ansteuerbar.

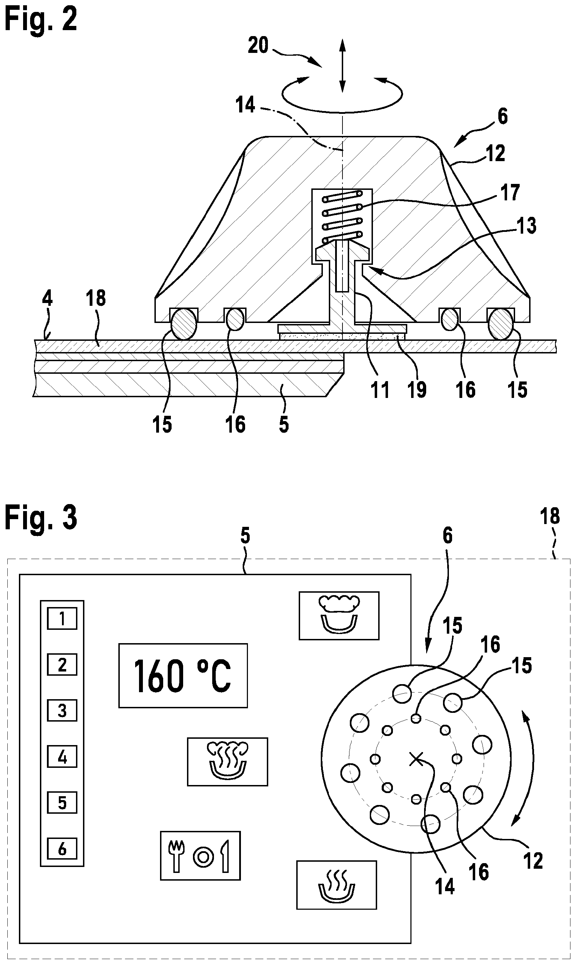

Des Weiteren zeigt Fig. 1 rein schematisch eine Oberfläche 4 des Küchen- und/oder Gastronomiegeräts 1. An dieser Oberfläche 4 befindet sich ein Touch-Display 5, das zusammen mit einer abdeckenden Scheibe 18 (siehe Fig. 2) einen Teil dieser Oberfläche 4 bildet.

Über Benutzereingaben an den Touch-Display 5 kann das Steuergerät 7 angesteuert werden. Zusätzlich zu dem Touch-Display 5 kann zumindest eine weitere Bedieneinheit 8 vorgesehen sein, um ebenfalls das Steuergerät 7 anzusteuern.

Die schematische Darstellung in Fig. 1 zeigt, dass sich an der Oberfläche 4, teilweise überlappend mit dem Touch-Display 5, eine Dreheinheit 6 befindet.

Fig. 2 zeigt in schematischer Schnittansicht diese Dreheinheit 6 auf der Oberfläche 4. Die Oberfläche 4 ist hier gebildet durch die Scheibe 18, beispielsweise eine Glasscheibe, mit darunterliegendem Touch-Display 5.

Die Dreheinheit 6 umfasst einen Sockel 11. Dieser Sockel 11 ist über eine Klebestelle 19 auf die Oberfläche 4, im gezeigten Beispiel auf die Scheibe 18, geklebt.

Auf dem Sockel 11 steckt ein Knopf 12 der Dreheinheit 6. Dieser Knopf 12 ist um eine zur Oberfläche 4 senkrechte Z-Achse 14 relativ zum Sockel 11 drehbar.

An der der Oberfläche 4 zugewandten Seite des Knopfes 12 befinden sich mehrere Touch-Elemente 15. Durch Drehen des Knopfes 12 um die Z-Achse 14 können diese Touch-Elemente 15 das Touch-Display 5 überstreichen, wodurch eine im allgemeinen Teil der Beschreibung beschriebene Benutzereingabe 20 erfolgt.

Radial innerhalb der Touch-Elemente 15 befinden sich optionale Zusatz-Touch-Elemente 16, die von der Oberfläche 4 etwas weiter beabstandet sind als die Touch-Elemente 15.

Wie die schematische Darstellung in Fig. 2 verdeutlicht, kann der Knopf 12 nicht nur um die Z-Achse 14 gedreht werden, sondern auch parallel zur Z-Achse 14 gedrückt werden. Diese drückende Bewegung kann über das Touch-Display 5 erfasst werden, da sich dabei die Zusatz-Touch-Elemente 16 dem Touch-Display 5 annähern. Alternativ ist es jedoch auch möglich, die Dreheinheit 6 ohne den Zusatz-Touch-Elementen 16 auszugestalten, wobei dann über die Touch-Elemente 15 die drückende Benutzereingabe 20 erfasst werden kann.

Ferner verdeutlicht die schematische Darstellung in Fig. 2, dass der Knopf 12 über eine Sockel-Knopf-Verbindung 13 mit Rastnasen am Sockel 11 befestigt ist.

Bei der drückenden Benutzereingabe 20 erfolgt eine Komprimierung eines elastischen Elementes 17, das den Knopf 12 wieder zurückstellt.

Fig. 3 verdeutlicht in einer schematischen Draufsicht die Positionierung der Dreheinheit 6 relativ zum Touch-Display 5. Gezeigt ist, dass die Dreheinheit 6 um etwa 50% der projizierten Fläche mit dem Touch-Display 5 überlappt. Da rund um die Z-Achse 14 mehrere Touch-Elemente 15 und mehrere Zusatz-Touch-Elemente 16 angeordnet sind, befinden sich stets mehrere dieser Elemente 15, 16 über dem Touch-Display 5, so dass stets sowohl die drehende als auch die drückende Benutzereingabe 20 ohne weiteres erfasst werden kann.

Fig. 3 verdeutlicht ferner anhand der Symbole und Zahlenangaben, dass sowohl durch die drehende als auch die drückende Benutzereingabe 20 beispielsweise die Heizeinheit 9 hinsichtlich der Temperatur als auch die Umlufteinheit 10 hinsichtlich des Garprogramms angesteuert werden können.

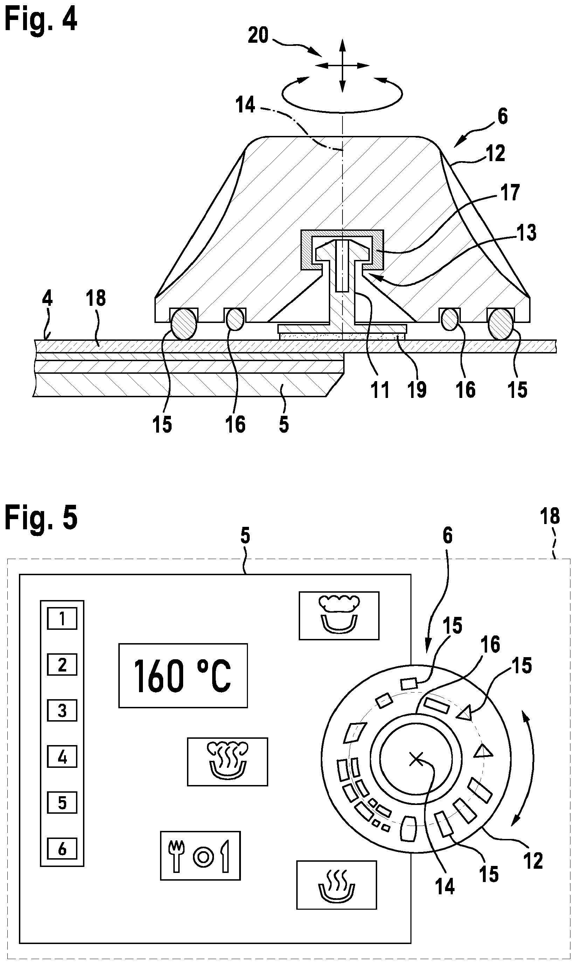

Fig. 4 verdeutlicht in schematischer Schnittansicht eine Variante zu Fig. 2. In Fig. 4 ist gezeigt, dass das elastische Element 17 zwischen Knopf 12 und Sockel 11 nicht nur als Feder, sondern auch als anderweitiges elastisches Element 17, beispielsweise als Schaumstoff oder Gummi ausgebildet sein kann.

Gemäß Fig. 4 ist es möglich, den Knopf 12 relativ zum Sockel 11 um die Z-Achse 14 zu drehen, parallel zur Z-Achse 14 zu drücken, als auch senkrecht zur Z-Achse 14 zu verschieben. Auch diese schiebende Bewegung senkrecht zur Z-Achse 14 kann über die Touch-Elemente 15 und das Touch-Display 5 ohne weiteres erfasst werden und als Benutzereingabe 20 am Steuergerät ausgewertet werden.

Wie im allgemeinen Teil der Beschreibung erläutert und in den Figuren des Ausführungsbeispiels verdeutlicht, ist die Dreheinheit 6 kabellos an der Oberfläche 4 angebunden. Insbesondere ist lediglich eine Informationsübertragung von der Dreheinheit 6 zur Steuereinheit 7 über das Touch-Display 5 vorgesehen.

Fig. 5 zeigt eine schematische Draufsicht auf die Dreheinheit 6 des Küchen- und/oder Gastronomiegeräts 1 gemäß dem Ausführungsbeispiel zur Verdeutlichung der optionalen Verwendung von Touch-Elementen 15 mit unterschiedlicher Größe und unterschiedlicher Geometrie.

Ferner zeigt Fig. 5 die Ausgestaltung des Zusatz-Touch-Elements 16 als Ring, wie dies im allgemeine Teil der Beschreibung erklärt ist. Diese Ausgestaltung als Ring kann unabhängig von den gezeigten Varianten der Touch-Elemente 15 zur Anwendung kommen.

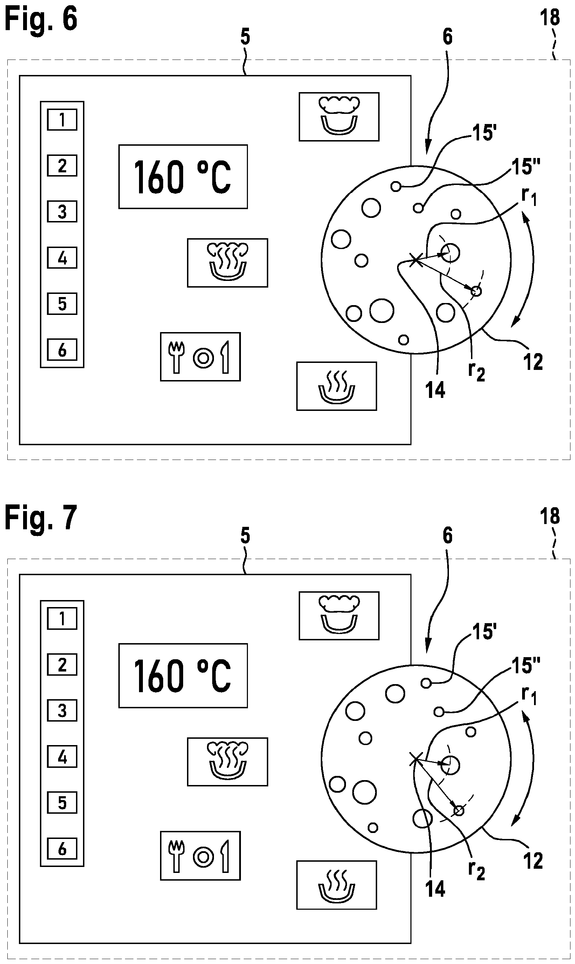

Fig. 6 und 7 zeigen bei unterschiedlichen Drehwinkeln die Dreheinheit 6 des Küchen- und/oder Gastronomiegeräts 1 gemäß dem Ausführungsbeispiel zur Verdeutlichung der optionalen Verwendung von ungleichmäßig verteilten Touch-Elementen 15 und/oder Touch-Elementen 15 unterschiedlicher Größe. Man erhöht dadurch die Genauigkeit und die Robustheit des Systems. Wenn zum Beispiel Verschmutzung auf dem Touch-Display 5 in der "Umlaufbahn" auf Radius r1 liegen würde, dann hat man die Möglichkeit auf Radius r2 eine eindeutige Erkennung abzubilden.

Der Vorteil der Touch-Elemente 15 mit unterschiedlicher Größe, unterschiedlicher Geometrie und/oder ungleichmäßiger Verteilung ist im allgemeinen Teil der Beschreibung erklärt und gilt insbesondere für das Ausführungsbeispiel.

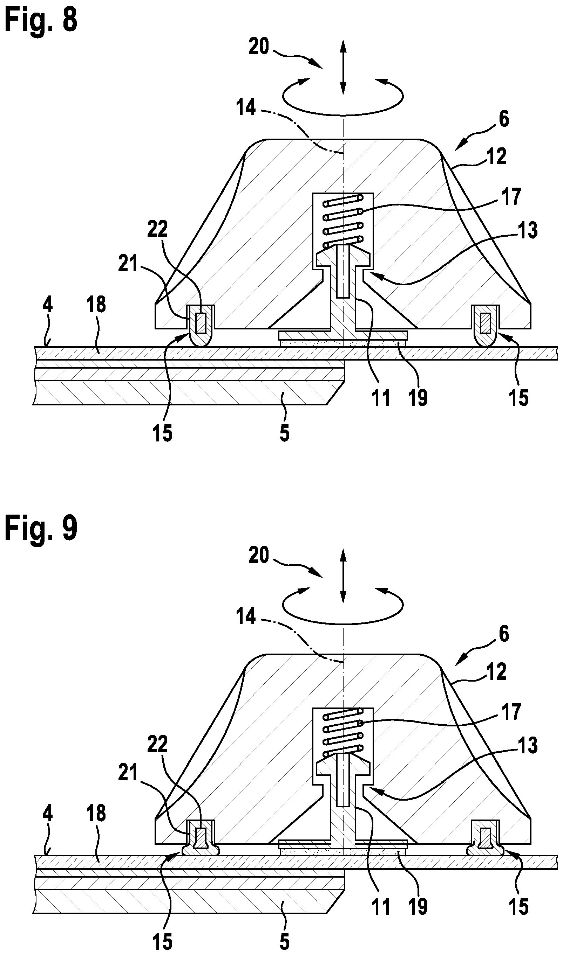

Fig. 8 und 9 zeigen zwei schematische Schnittansichten der Dreheinheit 6 des Küchen- und/oder Gastronomiegeräts 1 gemäß dem Ausführungsbeispiel wie in Fig. 2; hier jedoch mit deformierbaren Touch-Elementen 15. In Fig. 9 ist der Knopf 12 im Vergleich zu Fig. 8 in Richtung de Touch-Displays 5 gedrückt. Die schematische Darstellung zeigt, dass das Touch-Element 15 eine flexible Hülle 21 umfasst, in der ein elastisch deformierbares elektrisch leitendes Element 22 angeordnet ist. Diese optional zu verwendende Art des Touch-Elements 15 ist so ausgebildet, dass es bei der drückenden Betätigung durch Kontakt mit dem Touch-Display 5 deformiert wird, wobei sich durch die Deformation die Auflagefläche des Touch-Elements 15, insbesondere des elektrisch leitenden Elements 22, auf dem Touch-Display 5 vergrößert, was wiederrum als drückende Benutzereingabe 20 erfassbar ist.

Neben der vorstehenden schriftlichen Beschreibung der Erfindung wird zu deren ergänzender Offenbarung hiermit explizit auf die zeichnerische Darstellung der Erfindung in allen Figuren Bezug genommen.

### Bezugszeichenliste

- 1: Küchen- und/oder Gastronomiegerät
- 2: Gehäuse
- 3: Garraumtür
- 4: Oberfläche
- 5: Touch-Display
- 6: Dreheinheit
- 7: Steuergerät
- 8: weitere Bedieneinheiten
- 9: Heizeinheit
- 10: Umlufteinheit
- 11: Sockel
- 12: Knopf
- 13: Sockel-Knopf-Verbindung
- 14: Z-Achse
- 15: Touch-Elemente
- 16: Zusatz-Touch-Elemente
- 17: elastisches Element
- 18: Scheibe
- 19: Klebestelle
- 20: Benutzereingaben
- 21: flexible Hülle
- 22: elektrisch leitendes Element

## Patentansprüche

1. Küchen- und/oder Gastronomiegerät (1), insbesondere Gargerät, umfassend
• ein Steuergerät (7),
• ein an das Steuergerät (7) angeschlossenes Touch-Display (5),
• und eine Dreheinheit (6)
o mit einem vom Benutzer um eine Z-Achse drehbaren Knopf (12) zur Ausführung einer Benutzereingabe (20),
o und mit zumindest einem am Knopf (12) angeordneten Touch-Element (15) zum Überstreichen und dadurch Betätigen des Touch-Displays (5);
• wobei die Dreheinheit (6) auf einer Oberfläche (4) des Küchen- und/oder Gastronomiegeräts (1) befestigt ist.

2. Küchen- und/oder Gastronomiegerät (1) nach Anspruch 1, wobei an dem Knopf (12) mehrere der Touch-Elemente (15) angeordnet sind.

3. Küchen- und/oder Gastronomiegerät (1) nach einem der vorhergehenden Ansprüche, wobei das Touch-Display (5) eine kapazitives Touch-Display ist, und das zumindest eine Touch-Element (15), vorzugsweise jedes der mehreren Touch-Elemente (15), zur Betätigung des kapazitiven Touch-Displays (5) ausgebildet ist.

4. Küchen- und/oder Gastronomiegerät (1) nach einem der vorhergehenden Ansprüche, wobei die Dreheinheit (6) lediglich teilweise mit dem Touch-Display (5) überlappt; insbesondere wobei 20% bis 80%, vorzugsweise 30% bis 70%, der senkrecht auf die Oberfläche (4) projizierten Fläche der Dreheinheit (6) mit dem Touch-Display (5) überlappt; insbesondere wobei durch Drehen des Knopfes (12) das zumindest eine Touch-Element (15), vorzugsweise jedes der mehreren Touch-Elemente (15), über das Touch-Display (5) und vom Touch-Display (5) herunter bewegbar ist.

5. Küchen- und/oder Gastronomiegerät (1) nach einem der vorhergehenden Ansprüche,
• wobei alle Touch-Elemente (15) den selben Abstand zur Z-Achse aufweisen oder zumindest zwei, vorzugsweise mehr als zwei, Touch-Elemente (15) unterschiedlichen Abstand zur Z-Achse aufweisen,
• und/oder wobei sich die zumindest zwei, vorzugsweise mehr als zwei, der Touch-Elemente (15) in Größe und/oder Geometrie unterscheiden,
• und/oder wobei die Touch-Elemente (15) entlang des Umfangs um die Z-Achse ungleichmäßig verteilt sind.

6. Küchen- und/oder Gastronomiegerät (1) nach einem der vorhergehenden Ansprüche, wobei die Dreheinheit (6) einen an der Oberfläche (4) befestigten Sockel (11) umfasst, wobei der Knopf (12) drehbeweglich am Sockel (11) gelagert ist.

7. Küchen- und/oder Gastronomiegerät (1) nach einem der vorhergehenden Ansprüche, wobei die Dreheinheit (6) kabellos an der Oberfläche angebunden ist; insbesondere keine kabelgebundene Verbindung zwischen Dreheinheit (6) und Steuergerät (7) und keine kabelgebundene Verbindung zwischen Dreheinheit (6) und Touch-Display (5) vorgesehen ist.

8. Küchen- und/oder Gastronomiegerät (1) nach einem der vorhergehenden Ansprüche,
• wobei die Dreheinheit (6) auf die Oberfläche geklebt und/oder geschweißt und/oder gelötet und/oder genietet und/oder geschraubt ist;
• und/oder wobei das Touch-Display (5) von einer Scheibe (18) abgedeckt ist und die Dreheinheit (6) auf die Scheibe (18) geklebt ist; oder wobei das Touch-Display (5) von einem Rahmen, insbesondere aus Kunststoff oder Metall, umgeben ist und die Dreheinheit (6) auf den Rahmen geklebt ist.

9. Küchen- und/oder Gastronomiegerät (1) nach einem der vorhergehenden Ansprüche, wobei der Knopf (12) zum Ausführen einer Benutzereingabe parallel zur Z-Achse, vorzugsweise gegen ein elastisches Element (17), drückbar ist.

10. Küchen- und/oder Gastronomiegerät (1) nach einem der vorhergehenden Ansprüche, wobei das zumindest eine Touch-Element (15), vorzugsweise jedes der mehreren Touch-Elemente (15), zur überstreichenden Betätigung und zur drückenden Betätigung des Touch-Displays (5) ausgebildet ist.

11. Küchen- und/oder Gastronomiegerät (1) nach einem der vorhergehenden Ansprüche, wobei das zumindest eine Touch-Element (15), vorzugsweise jedes der mehreren Touch-Elemente (15), eine flexible Hülle umfasst, die elastisch deformierbar ist.

12. Küchen- und/oder Gastronomiegerät (1) nach einem der vorhergehenden Ansprüche, wobei die Dreheinheit (6) zumindest ein Zusatz-Touch-Element (16) umfasst, dass durch Drücken des Knopfes (12) ausreichend nahe an das Touch-Display (5) bewegbar ist, insbesondere das Touch-Display (5) berührt, um eine Benutzereingabe (20) auszuführen; insbesondere wobei das Zusatz-Touch-Element (16) als Ring um die Z-Achse ausgebildet ist.

13. Küchen- und/oder Gastronomiegerät (1) nach einem der vorhergehenden Ansprüche, wobei der Knopf (12) zum Ausführen einer Benutzereingabe (20) senkrecht zu Z-Achse, vorzugsweise gegen ein elastisches Element (17), schiebbar ist.

14. Küchen- und/oder Gastronomiegerät (1) nach einem der vorhergehenden Ansprüche, ausgebildet als Gargerät, umfassend einen Garraum und eine vom Steuergerät (7) angesteuerte Heizeinheit (9) und/oder Umlufteinheit (10), wobei durch Drehen der Dreheinheit (6) eine Temperatur und/oder ein Garprogramm einstellbar und/oder veränderbar ist/sind.

15. Verfahren zum Bilden eines Küchen- und/oder Gastronomiegeräts (1) nach einem der vorhergehenden Ansprüche, wobei die Dreheinheit (6) auf einer Oberfläche (4) des Küchen- und/oder Gastronomiegeräts (1) befestigt, insbesondere aufgeklebt, wird;
vorzugsweise wobei vor dem Befestigen ein Montageprogramm des Küchen- und/oder Gastronomiegeräts (1) gestartet wird und das Montageprogramm auf dem Touch-Display (5) zumindest eine Positionierungshilfe zum Positionieren der Dreheinheit (6) und/oder zum Positionieren einer Schablone anzeigt;
und/oder vorzugsweise wobei nach dem Befestigen ein Kalibrierungsprogramm des Küchen- und/oder Gastronomiegeräts (1) durchgeführt wird, wobei der Benutzer zumindest eine, im Kalibrierungsprogramm vordefinierte Bewegung an der Dreheinheit ausführt und das Steuergerät die dabei am Touch-Display erfassten Signale auswertet, um dahingehend zu kalibrieren, dass eine etwaige Abweichung der tatsächlichen Position der Dreheinheit von einer Sollposition berücksichtigt wird; vorzugsweise wobei dem Benutzer am Touch-Display die zumindest eine vordefinierte Bewegung, die vom Benutzer auszuführen ist, angezeigt wird.
